# EUROPEAN PATENT APPLICATION

(11) **EP 3 312 034 A1**
(43) Date of publication of application: **25.04.2018**
(21) Application number: 17194977.9
(22) Date of filing: 05.10.2017
(51) Int. Cl.: B60J 7/06, B60J 7/12, B60J 7/04, B60J 7/16, B60J 7/08

(54) **FRONT TOP ASSEMBLY FOR SUV**

(30) Priority: 05.10.2016 US 201662404321 P
(71) Applicant: Bestop, Inc., Louisville CO 80027 (US)
(72) Inventor: Haberkamp, William H., Rochester Hills, MI 48309 (US); Stickles, George C., Thornton, CO 80602 (US); Junkin, Duane C., Madison Heights, MI 48071 (US); Lewis, Stephen J., Harrison Township, MI 48045 (US)
(74) Representative: Maiwald Patentanwalts GmbH

(57) **Abstract**

An articulating front top cover assembly for a vehicle in sealing engagement with a hard top portion of a roof. The articulating portion is operably connected to a frame. An articulating portion movable between at least a closed position over the front vehicle compartment and open position for an open air feel.

## Description

### CROSS-REFERENCE TO RELATED APPLICATIONS

This application claims the benefit of U.S. Provisional Application No. 62/404,321, filed October 5, 2016. The disclosures of the above application are incorporated herein by reference.

### FIELD OF THE INVENTION

The present invention relates to a roof assembly having a soft panel top cover that seals against a hard top portion of the roof for a vehicle.

### BACKGROUND OF THE INVENTION

Providing convertible tops for sport utility (SUV) type vehicles is desired. In recent years, softop technology has advanced.

Foldable stowable roof soft tops are commonly used in sport-utility vehicles for recreational purposes. The foldable roof is typically moved between a stowed position, and a deployed position. When in the deployed position, the foldable roof protects the occupants of the vehicle from various weather conditions. The foldable roof also includes various sections which are made of a clear material to essentially function as a window, allowing the occupant of the vehicle to see outside of the vehicle. However, there are occasions where the weather is pleasant, and it is desired by the occupants of the vehicle to move the foldable roof to an open position such that the vehicle essentially functions without part of a roof or essentially functions without a roof, and the passenger compartment of the vehicle is exposed to the atmosphere. This allows the occupants of the vehicle to enjoy more favorable weather conditions while driving.

An alternative to the convertible soft top is to use a hard top that is bulky and does not provide any open air feel without removing the entire top. If the entire hard top is removed, it then must be stored, which is often difficult because of the size of the top. Other convertible roofs use a hard top that is large and bulky and does not provide any open air feel without removing two front top panels, which is also laborious, difficult, time consuming, and ergonomically disadvantageous. If one or more of the front top panels are removed, they then must also be stored, which is often difficult because of the size weight of the panels. While this will give the occupant an open air feel, the panels are large and bulky. If the occupant wants to gain the open air feel they need to exit the vehicle and remove the panels using multiple knobs and latches and then store the panels. This makes for a time consuming operation as well as a potential storage issue due to the size of the panels. They are also hard to handle due to their size and weight and due to the fact they must be installed and removed over the operators head. In the event of inclement weather, the panels also cannot be quickly put back in place.

Accordingly, there exists a need for a more manageable and easily stowable top made of soft material to provide a top that can be opened quickly to provide what is often referred to as an open air feel, where a portion of the top of the roof is moved from a closed or deployed position to an open or stowed position exposing a portion of the inside vehicle cockpit/passenger compartment to the outside without removing the top.

### SUMMARY OF THE INVENTION

The present invention is directed to a stowable soft top assembly, e.g., sliding and/or folding soft top assembly for 4-door and 2-door SUVs. Adaptable for UTVs, etc. is also contemplated.

According to one embodiment, a fabric cover is supported by a frame that is at least partially articulating, e.g., folded and/or pivoted, and/or slid or otherwise moved in any manner, from at least a closed position and an open air position.

In one embodiment, the soft panel top assembly has a pivotal portion that is lightweight and folds (or otherwise) rearward without the operator needing to leave the vehicle to give the occupant a quick and easy sunroof/open air feeling in the front cockpit. This is done more easily than with typical two-panel hard top systems that are more time consuming to disengage from the vehicle and are bulky to handle and remove. The present invention also eliminates storage issues since the soft panel top folds back rather than having to be removed entirely and stored as with conventional hard top panels. The soft panel top assembly has two door rails connected to side sport bars of the vehicle providing a sealing surface for the doors of the vehicle as well as pivot points for the pivotal portion of the soft panel top assembly. The soft panel top assembly has two side rail linkage assemblies connected to a first bow member that is secured to a windshield frame with quick release latches. Each side bow linkage assembly is connected to opposing ends of a fixed bracket connected to the respective door rail creating the pivot points with the use of the brackets. According to an embodiment, the soft panel top assembly includes a rear header that is a closeout for sealing engagement with at least an existing seal of the hard top roof portion. The soft panel top assembly is made lightweight by using a lighter rear header, e.g., rear header closeout that is a wireframe and/or lightweight molded section, and by using minimal framing and mostly soft goods. This further helps with ease of installation and ease of cycle efforts of the pivotal portion. Further, the assembly is preferably mountable to the vehicle without any modification, drilling of holes, or any other change to existing hardware and structure to the vehicle other than the removal of the manufacturers existing front cockpit panels.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a side elevation view of a soft panel top cover assembly shown in an open position connected to a 2-door vehicle, in accordance with a first embodiment of the present invention;
Figure 2 is a side elevation view of a soft panel top cover assembly shown in an open position connected to a 2-door vehicle, in accordance with another embodiment of the present invention;
Figure 3 is a perspective view of a soft panel top cover assembly shown in an open position connected to a 2-door vehicle, in accordance with another embodiment of the present invention;
Figure 4 is a perspective view of a soft panel top cover assembly shown in an open position connected to a 2-door vehicle, in accordance with another embodiment of the present invention;
Figure 5 is a side elevation view of a soft panel top cover assembly shown in an open position connected to a 2-door vehicle, in accordance with another embodiment of the present invention;
Figure 6 is a side elevation view of a soft panel top cover assembly shown in an open position connected to a 2-door vehicle, in accordance with another embodiment of the present invention;
Figure 7 is a side elevation view of a soft panel top cover assembly shown in an open position connected to a 2-door vehicle, in accordance with another embodiment of the present invention;
Figures 8A-9 are side elevation views of a soft panel top cover assembly shown from a closed to an open position connected to a 2-door vehicle, in accordance with another embodiment of the present invention;
Figure 10 is a perspective view of an attachment arrangement for a top cover assembly connected to a 2-door vehicle, in accordance with another embodiment of the present invention;
Figure 11 is a perspective view of an attachment arrangement for a top cover assembly connected to a 2-door vehicle, in accordance with another embodiment of the present invention;
Figure 12 is a top plan view of an attachment arrangement for a top cover assembly connectable to a vehicle, in accordance with another embodiment of the present invention;
Figure 13 is a top plan view of an attachment arrangement for a top cover assembly connectable to a vehicle, in accordance with another embodiment of the present invention;
Figure 14 is an exemplary rear header seal arrangement against an existing hard top seal and hard top of a vehicle, in accordance with an embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

Referring to the figures generally, the present invention provides a stowable soft top assembly or "soft panel top cover assembly" or "assembly" (used interchangeably herein).

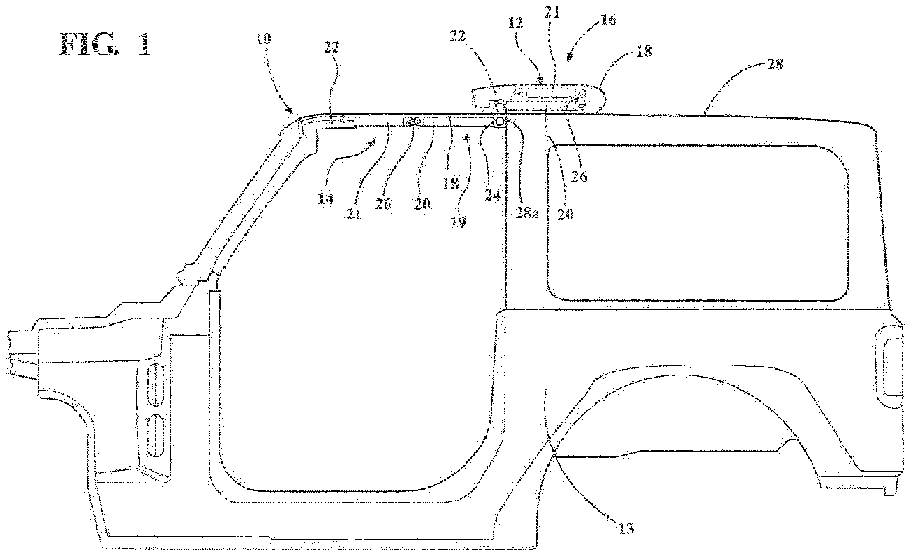

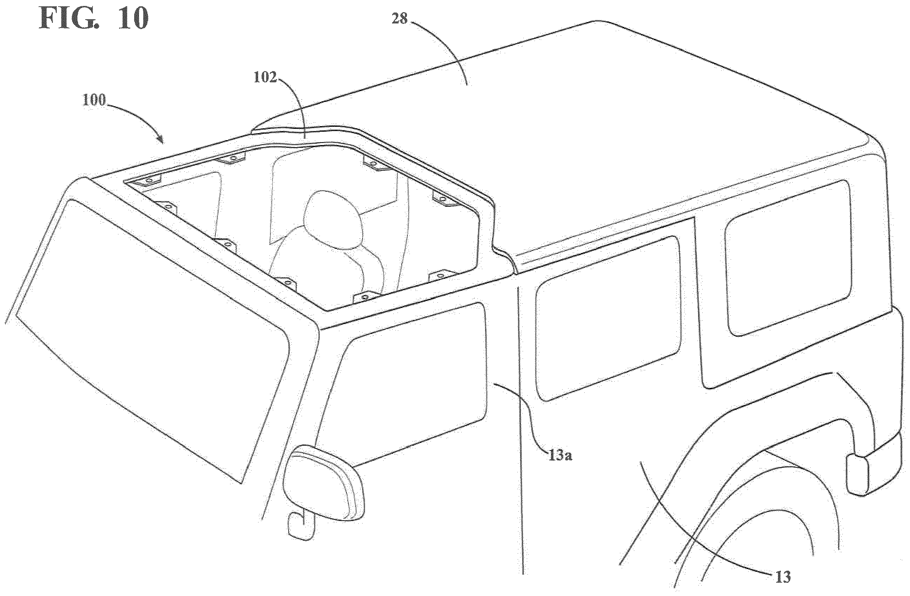

In general, Figures 1-9 and 14 depict front top assemblies, and Figures 10-13 depict attachment arrangements. The tops are operably connectable to the vehicle. The vehicle includes a windshield frame with side members, e.g., sport bars, extending generally therefrom and a cross bar or cross member operably connecting the side members generally adjacent the rear of the driver/passenger compartment.

Figure 1 depicts a soft top assembly 10 according to one embodiment of the present invention including an articulating portion shown generally at 12, forming a sunroof portion, that includes a cover 18 that is a soft top moveable between a closed position and at least one open position, said assembly 10 operably connected to the vehicle 13 and operably sealable against a hard top 28 toward a leading sealing surface 28a. By way of non-limiting example, the cover 18 is mat-like. The closed position, indicated generally at 14, closes off the occupant compartment. The open position, indicated generally at 16 (in phantom), exposes the compartment providing the open air feel. The cover 18 is operably coupled to a frame, shown generally at 19, to move between the closed/open positions. The frame 19 includes at least a rear link 20 pivotally connected to a front link 21. Additional linkages and linkage assemblies are contemplated depending on the application without departure from the scope of the present invention. The links 20,21 form articulating door rail segments, according to an aspect of the present invention. These door rail segments act as both linkages for articulation of the sunroof portion 12 and as sealing surface for the vehicle doors and/or top deck.

The cover 18 and frame 20 are operably coupled to a front header 22 connectable to a windshield frame area when in the closed position, where the front header 22 travels with the sunroof portion to the open position 16. At least one hinged pivot point 24 is provided, preferably toward the rear of the sunroof portion generally adjacent the leading edge of the hardtop 28a, for flipping the unit back and out of the way. While the assembly 10 is depicted on the top of the hard top 28 with the frame 19 generally horizontal, it is understood that at least one stop or other suitable feature can be incorporated into the assembly 10 to set the predetermined allowed range of motion to the open position relative to the hard top 28.

In an embodiment of the present invention, the frame 20 is operably coupled to at least one side door rail on each side of the assembly 10 operably coupled to the vehicle (e.g., connected to the sport bar), and/or a rear header, and/or fabric management bows operably coupled to the cover 18, and/or other component(s) suitable to effectively articulate the assembly 13.

The assembly 10 is operably connected to the vehicle 13, e.g., such as to the side sports bar(s) and/or cross car member, and/or hard top 28, etc.

At least one intermediate hinged pivot 26 is provided to operably fold the cover 18, e.g., fold generally in half. The hinged pivot point 24 is a double hinge point. Alternatively, the hinge point 24 is a single hinge point. In addition, the frame's 19 rear link 20 and front link 21 are pivotally connected at an intermediate double hinge point 26 adjacent to the hard top 28 front edge. Alternatively, the hinge point 26 is a single hinge point.

These hinge points 24,26 can be single, double or any type of hinge or any other articulating mechanism configured to fold and flip the articulating portion 12 over the leading edge of the hard top 28 and the top 10 is adapted to either rest adjacent to the hard top 28. The hinge points 24 and/or 26 are operably located for moving the assembly 10 between the open and closed positions, e.g., at least one hinge located on both sides of the articulating portion 12, at least one located toward the rear of the articulating portion 12, and/or at least one extending cross car, etc. and/or combinations thereof. More or less hinging points and more or less folds (e.g., generally in half, thirds, etc.) of the cover 18 are contemplated without departure from the present invention. Preferably at least one hinge point is provided on each side. It is also contemplated that the cover 18 could be operably hinged to fold the header 22 under or in the direction toward the back of the vehicle.

Providing at least one fabric management bow, e.g., fixed and/or articulating bow(s), is contemplated without departure from the present invention. Providing at least one linkage assembly incorporated for moving the articulating portion 12 between the open/closed positions is contemplated without departure from the present invention. Providing the frame with at least one door rail and/or rear header is contemplated without departing from the scope of the present invention. Providing at least one lighting device on the assembly 10 is contemplated without departure from the present invention. Providing at least one stop to set a predetermined height of any hardware of the articulating portion 12 in the open sunroof position above the hard top 28 is contemplated without departing from the scope of the present invention. Providing at least one seal is contemplated without departure from the present invention, e.g., front header corner seal(s) 22, side rail seal(s), rear header seal(s), articulating portion 12 seal(s), etc. and combinations thereof, e.g., closed cell, rubber, bulb, flange, and/or mucket seal(s). Adapting for sealing engagement with a soft top, slanted back top, and any other vehicle top is also contemplated without departure from the present invention. Adapting for use with environment diffusion shade(s) connected over the cockpit is also contemplated without departure from the present invention.

Referring further to Figure 1, preferably the front header 22 or "1 bow" is released from the windshield header and articulated rearward exposing the front compartment. At least one soft material panel 18 is managed rearward during 1 bow articulation. A linkage assembly can either be a unique bow structure or links can consist of articulating door rail segments, e.g., 20 and 21 providing articulation and sealing surface(s). The door rail segments act as both linkages for articulation and as sealing surface for the doors and/or top deck, according to an aspect of the present invention. Hinge points 24,26 could be double as shown or singular (and also offset/gooseneck, etc).

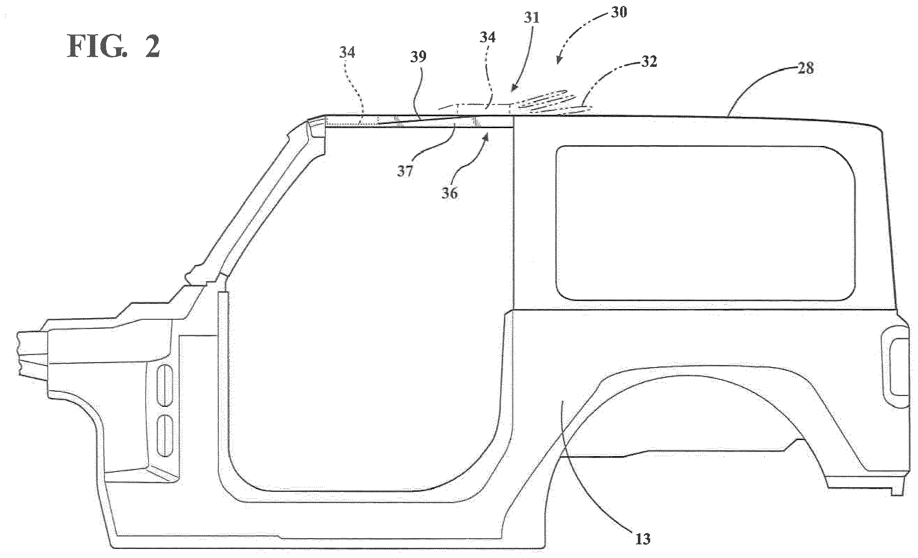

Figure 2 depicts a soft top assembly 30 according to an embodiment of the present invention including an articulating portion or sunroof portion shown generally at 31 with a cover 32 that is a soft top material moveable between a closed position and at least one open position, said assembly 30 operably connected to the vehicle 13 and operably sealable against a hard top 28. By way of non-limiting example, the cover 32 is twill acrylic fabric or sailcloth fabric. The closed position closes off the occupant compartment. The open position, indicated generally at 36 (in phantom), exposes the occupant compartment providing the open air feel. The cover 32 is operably coupled to a front header 34 and/or a frame to move between the closed/open positions. Preferably, a frame is provided and operably coupled to and/or incorporating a door rail, and/or a rear header, and/or other component(s) and operably connected to the vehicle 13, e.g., such as to the side sports bar(s) and/or cross car member, and/or hard top 28, etc.

The front header 34 is connectable to a windshield frame area when in the closed position, and the front header 34 travels with the sunroof portion to the open position 32. Preferably the sunroof portion 36 is operably slid, alternatively rotated or otherwise suitably moved, toward the hard top 28, as indicated by the arrow, for moving the unit back and out of the way. The cover 32 preferably operably folds in an accordion like fashion and rests on top of the hard top 28. It is contemplated that the header 34 is positionable generally above the hard top 28 area without departing from the scope of the present invention. According to an aspect of the present invention, a captive motion track 39, is provided, e.g., track connected to a sport bar 37 or a door rail, for a slidable member of the sunroof portion 31 to move between the closed position and at least one open position.

Providing at least one stop to set a predetermined height of any hardware of the assembly 30 in the open sunroof position above the hard top 28 is contemplated without departing from the scope of the present invention. Providing at least one hinged pivot point is contemplated without departure from the present invention. Providing at least one fabric management bow, e.g., fixed and/or articulating bow(s), is contemplated without departure from the present invention. Providing at least one linkage assembly incorporated for moving the sunroof portion between the open/closed positions is contemplated without departure from the present invention. Providing at least one cabin lighting device on the assembly 30 is contemplated without departure from the present invention. Providing the frame with at least one door rail and/or rear header is contemplated without departing from the scope of the present invention. Providing at least one seal is contemplated without departure from the present invention, e.g., front header seal(s) 34, rear header seal(s), sunroof portion seal(s), etc. and combinations thereof. Adapting for sealing engagement with a soft top, slanted back top, and any other vehicle top is also contemplated without departure from the present invention. Operably adapting for use with environment diffusion shade(s) connected over the cockpit is also contemplated without departure from the present invention.

Referring further to Figure 2, preferably the soft panel covers the occupants. The front header 34 or "1 bow" is released from the windshield and slides rearward (e.g., mostly horizontally) in a track system exposing the front driver's compartment. The soft panel material is managed rearward as the front header 34 is articulated. The system could be manual or could be powered. A spring fabric management stiffener is provided in one embodiment.

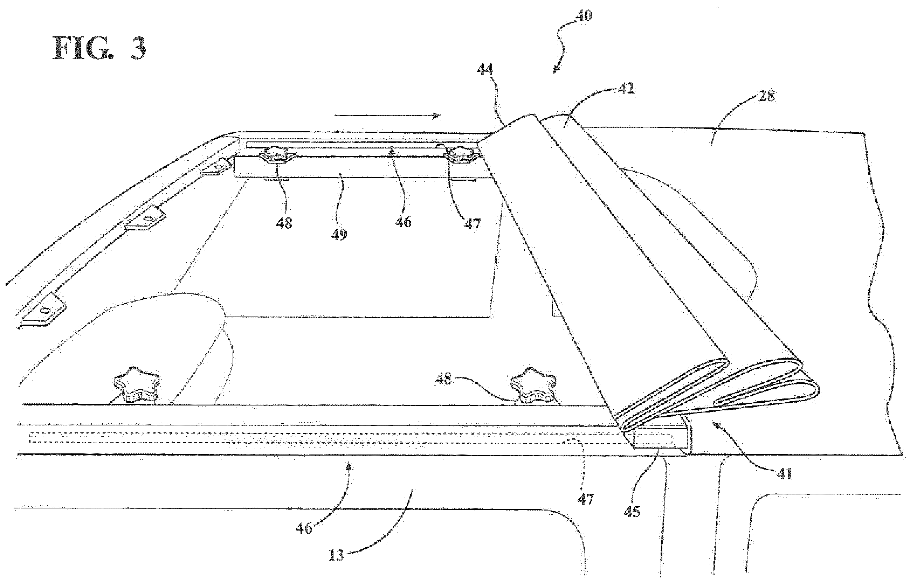

Figure 3 depicts a soft top assembly 40 according to an embodiment of the present invention including a sunroof portion or articulating portion shown generally at 41 with a cover 42 that is a soft top panel material moveable between a closed position and at least one open position. The assembly 40 is operably connected to the vehicle 13 and operably sealable against a hard top 28. By way of non-limiting example, the cover 42 is twill acrylic fabric or sailcloth fabric. The closed position closes off the occupant compartment. The open position, generally depicted in Fig. 3, exposes the occupant compartment providing the open air feel. The cover 42 is operably coupled to a front header 44 and/or a frame to move between the closed and open positions.

Preferably, a frame is provided and is operably coupled to and/or incorporates a door rail, and/or a rear header, and/or other component(s) and operably connected to the vehicle 13, e.g., such as to the side sports bar(s) and/or cross car member, and/or hard top 28, etc. The front header 44 is connectable to a windshield frame area when in the closed position, and the front header 44 travels with the sunroof portion to the open position.

Preferably the articulating portion 41 is operably slid, alternatively rotated or otherwise suitably moved, toward the hard top 28, as indicated by the arrow, for moving the unit back and out of the way. Typically, a slidable member 45 is operably configured for sliding and operably coupled to the articulating portion 41 to slid within a channel 47. By way of non-limiting example the door rail 46 (or any suitable structure) is provided with a generally horizontal channel 47 (alternatively, a track) for sliding the header 44 or another component back and forth in the channel between the closed and open positions.

The sliding member 45 is a pin, roller, roller bearing and/or any suitable slidable piece captured in the channel to move the sunroof portion between the closed and open positions when desired. A mechanical lock operable to selectively engage the slidable member 45 to keep the sunroof in the open position when desired is within the scope of the present invention.

The door rail 46 is operably connected to the vehicle 13 with at least one fastening portion, such as providing at least one clamping surface shown generally at 48 on door rail 46 which fastens to the sports bar 49 with at least one fastener, e.g., mushroom knob that screws into the sport bar 49. The cover 42 preferably operably folds in an accordion like fashion and rests on top of the hard top 28.

According to an aspect of the present invention, the door rails 46,46 are operably connected to, or integrally formed with, a rear and/or front header cross car member(s) forming a cassette type attachment system, e.g, 1-piece cassette, multi-piece cassette, 3-piece cassette.

Providing at least one stop to set a predetermined height of any hardware of the assembly 40 in the open sunroof position above the hard top 28 is contemplated without departing from the scope of the present invention. Providing at least one hinged pivot point is contemplated without departure from the present invention. Providing at least one fabric management bow, e.g., fixed or articulating bow(s), is contemplated without departure from the present invention. Providing at least one linkage assembly incorporated for moving the sunroof portion between the open/closed positions is contemplated without departure from the present invention. Providing at least one cabin lighting device on the assembly 50 is contemplated without departure from the present invention. Providing the frame with at least one door rail and/or rear header is contemplated without departing from the scope of the present invention. Providing at least one seal is contemplated without departure from the present invention, e.g., front header seal(s) 58, rear header seal(s), sunroof portion seal(s), etc. and combinations thereof. Adapting for sealing engagement with a soft top, slanted back top, and any other vehicle top is also contemplated without departure from the present invention. Operably adapting for use with environment diffusion shade(s) connected over the cockpit is also contemplated without departure from the present invention.

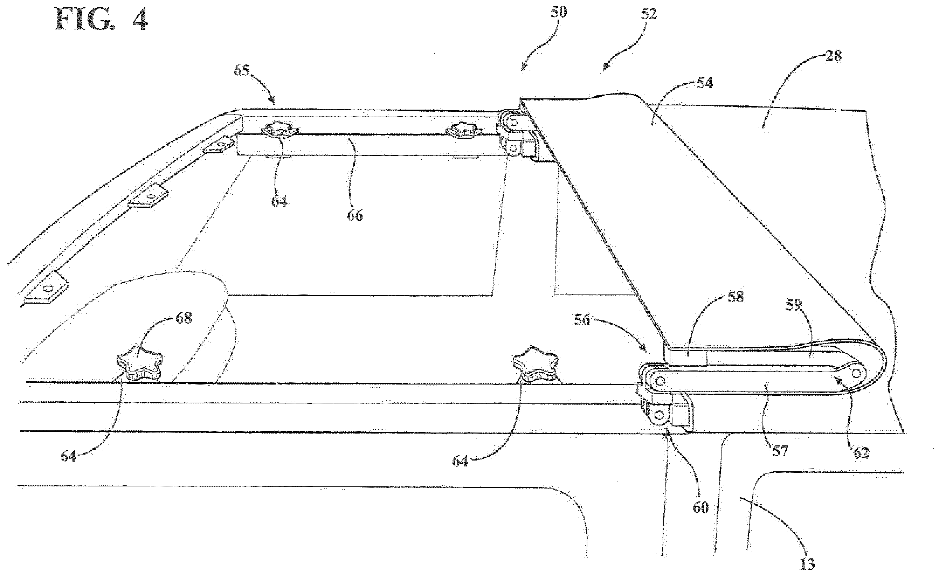

Figure 4 depicts a soft top assembly 50 according to an embodiment of the present invention including a sunroof portion or articulating portion shown generally at 52 including a cover 54 that is a soft top sunroof portion moveable between a closed position (e.g., depicted in Fig. 1) and at least one open position. The assembly 50 is operably connected to the vehicle 13 and operably sealable against a hard top 28. The closed position closes off the occupant compartment. The open position, generally depicted exposes the compartment providing the open air feel.

The cover 54 is operably coupled to a frame indicated generally at 56 to move between the closed/open positions. Preferably, the frame 56 is operably coupled to and/or incorporates at least one side door rail, and/or rear header, and/or other component(s) and is operably connected to the vehicle 13, e.g., such as to the side sports bar(s) and/or cross car member, and/or hard top 28, etc. Preferably, the cover 54 and/or frame 56 is operably coupled to a front header 58 connectable to a windshield frame area when in the closed position, e.g., with latches, where the front header 58 travels with the sunroof portion to the open position.

At least one hinged pivot point 60 is provided, shown generally at 60, preferably toward the rear of the articulating portion 52, for flipping the unit back and out of the way on top of the hard top 28. At least one intermediate hinged pivot, shown generally at 62, is provided to operably fold the cover 54, e.g, fold generally in half. These hinge points 60 can be single, double or any type of hinge or any other articulating mechanism configured to fold and flip the articulating portion 52 over the leading edge of the hard top 28 and the top 50 is adapted to either rest on or above the hard top 28. The hinge points 60 and/or 62 are operably located for moving the assembly 50 between the open and closed positions, e.g., at least one hinge located on both sides of the articulating portion 52, at least one located toward the rear of the articulating portion 52, and/or at least one extending cross car, etc. and/or combinations thereof. More or less hinging points and more or less folds (e.g., generally in half, thirds, etc.) of the cover 54 are contemplated without departure from the present invention. It is also contemplated that the cover 54 could be operably hinged to fold the header 58 under or in the direction toward the back of the vehicle. The frame 56 is operably connected to the vehicle 13 with at least one fastening portion, such as providing at least one clamping surface 64 on the frame 56, e.g., on a door rail, which fastens to the sports bar 66 with at least one fastener 68, e.g., mushroom knob that screws into the sport bar 66. Providing at least one fabric management bow, e.g., fixed or articulating bow(s), is contemplated without departure from the present invention. Providing at least one linkage assembly incorporated for moving the articulating portion 52 between the open/closed positions is contemplated without departure from the present invention. Preferably, at least one linkage assembly is provided and operably connected to the frame, most preferably to the door rail, by at least one pivot point, at least two pivot points on each door rail, etc. Providing the frame with at least one door rail and/or rear header is contemplated without departing from the scope of the present invention. Providing at least one lighting device on the assembly 50 is contemplated without departure from the present invention. Providing at least one stop to set a predetermined height of any hardware of the articulating portion 52 in the open sunroof position above the hard top 28 is contemplated without departing from the scope of the present invention. Providing at least one seal is contemplated without departure from the present invention, e.g., front header seal(s) 58, rear header seal(s), articulating portion 52 seal(s), etc. and combinations thereof. Adapting for sealing engagement with a soft top, slanted back top, and any other vehicle top is also contemplated without departure from the present invention. Adapting for use with environment diffusion shade(s) connected over the cockpit is also contemplated without departure from the present invention.

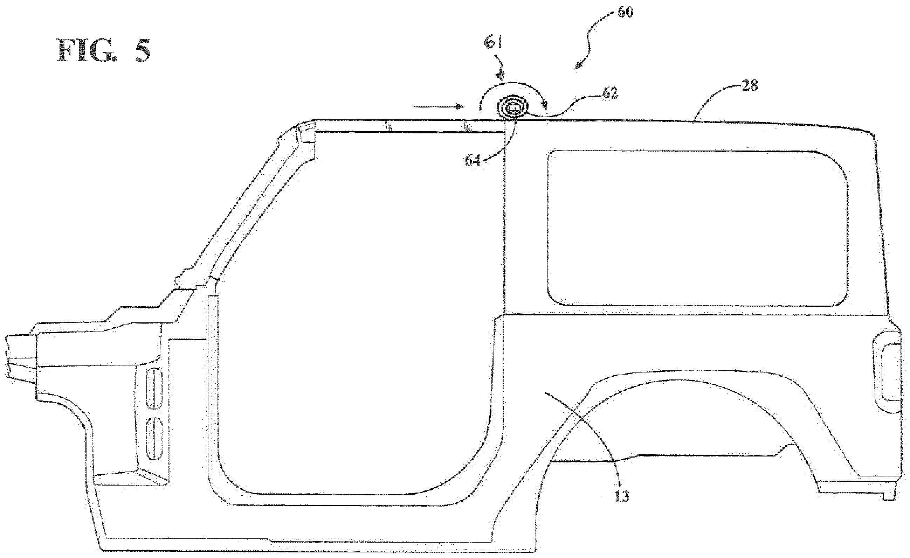

Figure 5 depicts a soft top assembly 60 according to an embodiment of the present invention including a sunroof portion or articulating portion, shown generally at 61, with a cover 62 that is a soft top moveable between a closed position and at least one open position, generally as depicted by the arrows, said assembly 60 operably connected to the vehicle 13 and operably sealable against a hard top 28. In this embodiment the cover 52 is operably connected to the front header 62 and rolls up, as indicated by the arrow. In one embodiment, a frame is also provided which is operably connected to the vehicle 13 with at least one fastening portion. Providing at least one side door rail, and/or rear header, and/or other component(s) and is also contemplated without departing from the scope of the present invention. Providing at least one fabric management bow, e.g., fixed or articulating bow(s), is contemplated without departure from the present invention. Providing at least one lighting device on the assembly 60 is contemplated without departure from the present invention. Providing at least one strap or other retaining mechanism to hold the sunroof position adjacent the hard top 28 is contemplated without departing from the scope of the present invention. Providing at least one seal is contemplated without departure from the present invention, e.g., front header seal(s) 64, rear header seal(s), articulating portion seal(s), etc. and combinations thereof. Adapting for sealing engagement with a soft top, slanted back top, and any other vehicle top is also contemplated without departure from the present invention. Adapting for use with environment diffusion shade(s) connected over the cockpit is also contemplated without departure from the present invention.

Referring further to Figure 5, preferably the header section is rolled rearward, managing the material and exposing the front compartment. Alternatively, the front header stays affixed and a rear header released and rolled forward. The sides can be trim locked. Velcro can also be provided. The roll style assembly is adaptable to roll forward and/or rearward.

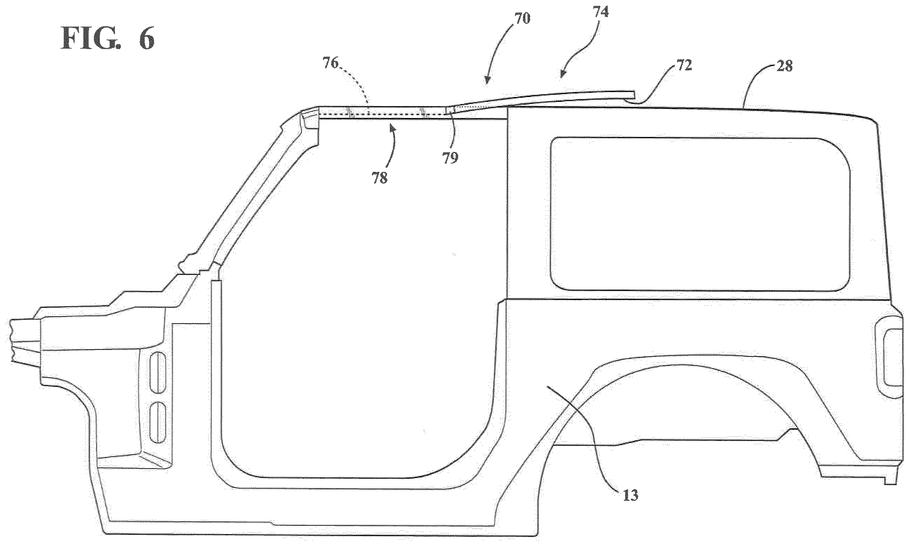

Figure 6 depicts an articulatable top assembly 70 according to an embodiment of the present invention including a sunroof portion or articulating portion shown generally at 74 where the cover is composed of at least one solid panel 72, e.g., hard solid or semi-rigid panel, moveable between a closed position and at least one open position, generally as depicted by the arrow, said assembly 70 operably connected to the vehicle 13 and operably sealable against a hard top 28. The articulating portion 74 slides back, such as sliding a rail of the articulating portion 74 in a channel 76 or a track provided in the side frame, indicated generally 78 operably connected to the vehicle 13, according to one embodiment of the invention. The side frame 78 can be a door rail connected to a sport bar, track connected to a sport bar or other suitable structure. Providing at least one side door rail, and/or rear header, and/or other component(s) and is also contemplated without departing from the scope of the present invention. Providing at least one linkage assembly is contemplated without departure from the present invention. Providing at least one lighting device on the assembly 70 is contemplated without departure from the present invention. Providing at least one stop to set a predetermined height of any hardware of the articulating portion 74 in the open sunroof position adjacent the hard top 28 is contemplated without departing from the scope of the present invention. Providing at least one seal is contemplated without departure from the present invention, e.g., front header seal(s), rear header seal(s), articulating portion seal(s), etc. and combinations thereof. Adapting for sealing engagement with a soft top, slanted back top, and any other vehicle top is also contemplated without departure from the present invention. Adapting for use with environment diffusion shade(s) connected over the cockpit is also contemplated without departure from the present invention.

The articulating portion 84 is preferably provided with a sliding member 79 captured in the channel 76, e.g., that is a pin, roller, roller bearing and/or any suitable slidable piece captured in the channel 76 to move the sunroof portion between the closed and open positions when desired. A mechanical lock, velcro or any other suitable predetermined locking feature operable to selectively engage the slidable member 79 or other component to keep the sunroof in the open position when desired is within the scope of the present invention.

Referring further to Figure 6, preferably the solid panel(s) 72 slide rearward exposing the front cockpit. There can be a single panel 72 or at least two panels 72 (e.g., driver panel and passenger panel). A plurality of cross car panels 72 that stack as the top is operated rearward is also contemplated without departing from the scope of the present invention. Side way stack either way in either cross car direction is also contemplated.

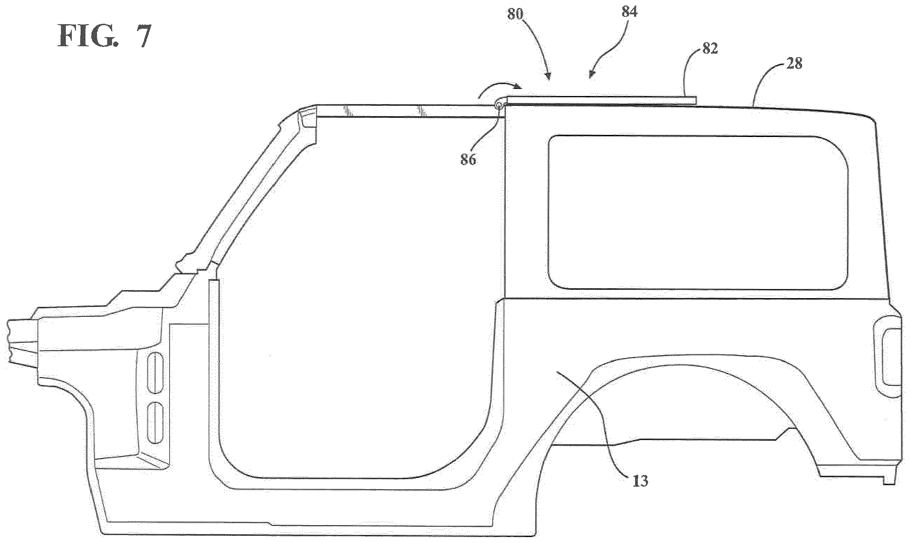

Figure 7 depicts an articulating top assembly 80 according to an embodiment of the present invention including an articulating portion or sunroof portion shown generally at 84 where the cover is composed of at least one front panel 82 that moveable between a closed position and an open position, generally as depicted by the arrow, said assembly 80 operably connected to the vehicle 13 and operably sealable against a hard top 28. The articulating portion 84 flips back. The articulating portion 84 is operably coupled to a frame that includes at least one hinge point 86, e.g., such as a single hinge point operably coupled with a door rail or sport bar or other suitable structure, to move the panel(s) 82 between the closed/open positions. Preferably, the frame is operably coupled to and/or incorporates at least one side door rail, and/or rear header, and/or other component(s) and is operably connected to the vehicle 13, e.g., such as to the side sports bar(s) and/or cross car member, and/or hard top 28, etc. Preferably, the panel(s) 82 and/or frame 20 is connectable to a windshield frame area when in the closed position. At least one hinged pivot point 86 is provided, preferably toward the rear of the sunroof portion, for flipping the unit back and out of the way. Additional hinge points and hinging locations are contemplated without departure from the present invention. Preferably at least one hinge point is provided on each side. Providing at least one linkage assembly incorporated for moving the articulating portion 84 between the open/closed positions is contemplated without departure from the present invention. Providing the frame with at least one door rail and/or rear header is contemplated without departing from the scope of the present invention. Providing at least one lighting device on the assembly 80 is contemplated without departure from the present invention. Providing at least one stop to set a predetermined height of any hardware of the articulating portion 84 in the open sunroof position above the hard top 28 is contemplated without departing from the scope of the present invention. Providing at least one seal is contemplated without departure from the present invention, e.g., front header seal(s), rear header seal(s), articulating portion 84 seal(s), etc. and combinations thereof, e.g., closed cell, rubber, bulb, flange, and/or mucket seal(s). Adapting for sealing engagement with a soft top, slanted back top, and any other vehicle top is also contemplated without departure from the present invention. Adapting for use with environment diffusion shade(s) connected over the cockpit is also contemplated without departure from the present invention.

Referring further to Figure 7, preferably the panel is solid or a rigid framework with soft panel insert/skin. The panel is selectively released from the windshield header and flipped rearward exposing the front compartment. The panel is a single panel or a plurality of panels (e.g., driver side and passenger side). There is provided a frame and multiple panels. The panels are vacuum formed, e.g., inner panel and outer panel.

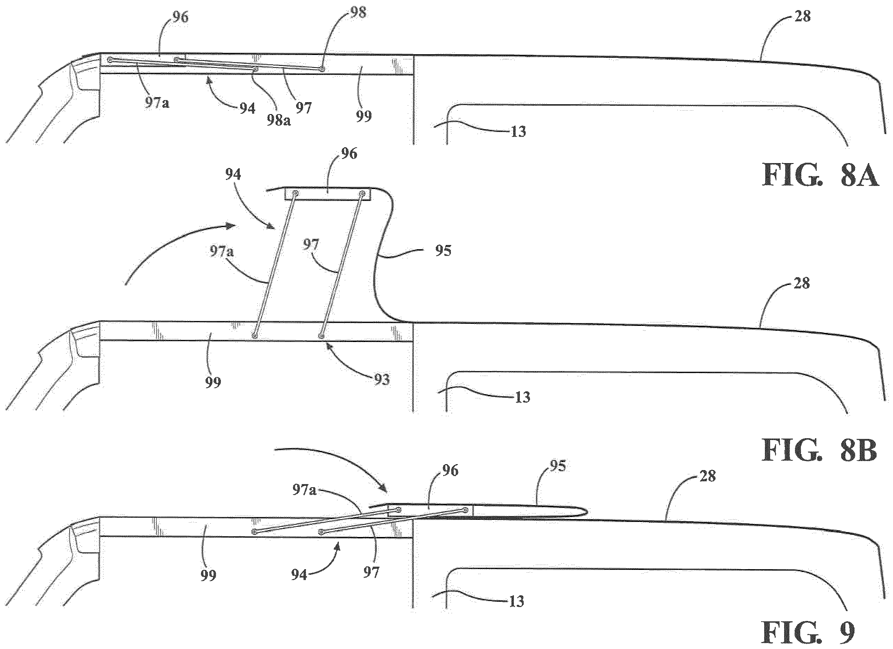

Figures 8A, 8B and 9 depict a soft top assembly 90 according to an embodiment of the present invention including a sunroof portion or articulating portion shown generally at 94 with a cover 95 that is a soft top moveable between a closed position and an open position, generally as depicted by the arrows, said assembly 90 operably connected to the vehicle 13 and operably sealable against a hard top 28. The cover is also operably connected to a front header 96, depicted in the closed, articulating, and open positions. The cover 92 is operably coupled to a frame, shown generally at 93, that includes at least one link 97 (preferably, at least two links 97,97a) each connected at a respective hinge point 98, e.g., such as a hinge point provided on a door rail 99 or to a sport bar of the vehicle, to move the cover between the closed/open positions. Preferably, at least two hinge points 98,98a on each door rail 99 connect respective first and second links 97 and 97a. Preferably, the frame is operably coupled to and/or incorporates at least one side door rail 99, and/or rear header, and/or other component(s) and is operably connected to the vehicle 13, e.g., such as to the side sports bar(s) and/or cross car member, and/or hard top 28, etc. Preferably, the cover and/or frame is operably coupled to a front header connectable to a windshield frame area when in the closed position, where the front header travels with the articulating portion 90 to the open position. Additional hinge points and hinging locations are contemplated without departure from the present invention. The frame includes at least one linkage assembly operably for moving the articulating portion 94 between the open/closed positions. The linkage assembly preferably includes at least the two hinge points 98,98a and at least two links 99,99a, however, additional links are contemplated (such as at least one intermediate link hinged at the first and second links connecting the links together). Preferably, the front header 96 is generally horizontal throughout the rotation from the closed to open position and is horizontally disposed in the closed position. Alternatively, it is contemplated that the header flips back or is tilted. Providing at least one fabric management bow, e.g., fixed or articulating bow(s), is contemplated without departure from the present invention. Preferably, the cover is manipulated in a generally accordion like fashion to the closed position. Providing the frame with at least one door rail and/or rear header is contemplated without departing from the scope of the present invention. Providing at least one lighting device on the assembly 90 is contemplated without departure from the present invention. Providing at least one stop to set a predetermined height of any hardware of the articulating portion 94 in the open sunroof position above the hard top 28 is contemplated without departing from the scope of the present invention. Providing at least one seal is contemplated without departure from the present invention, e.g., front header seal(s), rear header seal(s), articulating portion 94 seal(s), etc. and combinations thereof, e.g., closed cell, rubber, bulb, flange, and/or mucket seal(s). Adapting for sealing engagement with a soft top, slanted back top, and any other vehicle top is also contemplated without departure from the present invention. Adapting for use with environment diffusion shade(s) connected over the cockpit is also contemplated without departure from the present invention.

Referring further to Figures 8A-9, preferably the header or 1-bow 96 seals to the windshield frame, or if cassette is used, to the cassette front rail. The 1-bow 96 is released and articulated rearward. The links 98,98a are operably pivotally mounted in the door rail and/or sport bar. The header 96 maintains the horizontal orientations. The articulating portion 94 stows rearward of the front compartment and operably manages the cover material 95.

Figures 8A-9 depict the header 96 of the articulating portion 94 remaining in the same orientation as it moves from the closed to open positions (e.g., header 96 is not flip over to expose a bottom surface of the header).

Referring to Figures 10-13 generally, there are depicted various attachment methods for incorporation with any of the aforementioned embodiments, in particular, for selectively using with any of the articulating portions depicted in Figures 1-9.

Figure 10 depicts a sunroof frame attachment assembly shown generally at 100 according to an embodiment of the present invention including at least one attachment portion 102 operable for an articulating portion (omitted for clarity, but, according to a broad aspect of the present invention, is understood to be any articulating assembly depicted in Figs. 1-9 that moves between at least a closed position and at least one open position for an open front cockpit feel). There is depicted a cassette 102 style attachment. The cassette 102 attachment is a one-piece frame located for sealing engagement to the front and rear (adjacent the windshield frame and hard top sealing edge). Both sides of the one-piece frame also seal to the front vehicle doors 13a. The frame 100 operably connects to the vehicle 13, e.g., to the sport bars, vehicle opening frame, cross car member, and/or windshield frame, etc. and any combinations thereof).

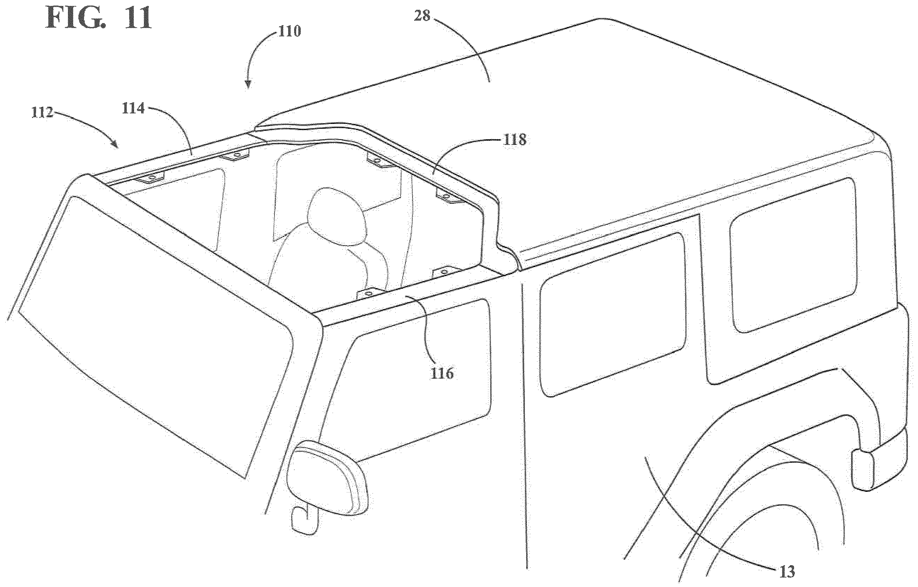

Figure 11 depicts a sunroof frame attachment assembly shown generally at 110 according to an embodiment of the present including at least one attachment portion operable for an articulating portion (omitted for clarity, but, according to a broad aspect of the present invention, is understood to be any articulating assembly depicted in Figs. 1-9 that moves between at least a closed position and at least one open position for an open front cockpit feel). There is depicted a 3-piece frame shown generally at 112, including a first door rail 114, a second door rail 116 and a rear header 118. More or less pieces are contemplated without departing from the scope of the present invention. Thus, the assembly 110 utilizes door rails and a rear header. The door rails 114,116 act as sealing surface for the articulating top (e.g., any articulating assembly depicted in Figs. 1-9) and front doors 13a. The door rails 114,116 also preferably provide mounting for at least one pivot point or hinge point and/or a rail or track system. The rear header 118 operably seals to the factory hard top 28 and acts as a mounting panel for soft goods. The rear header 118 is a single piece or a plurality of pieces operably connected together (preferably, a single piece), and is preferably lightweight (e.g., wireframe and/or lightweight molded piece(s). The frame 110 operably connects to the vehicle 13, e.g., to the sport bars, vehicle opening frame, cross car member, and/or windshield header frame, etc. and any combinations thereof).

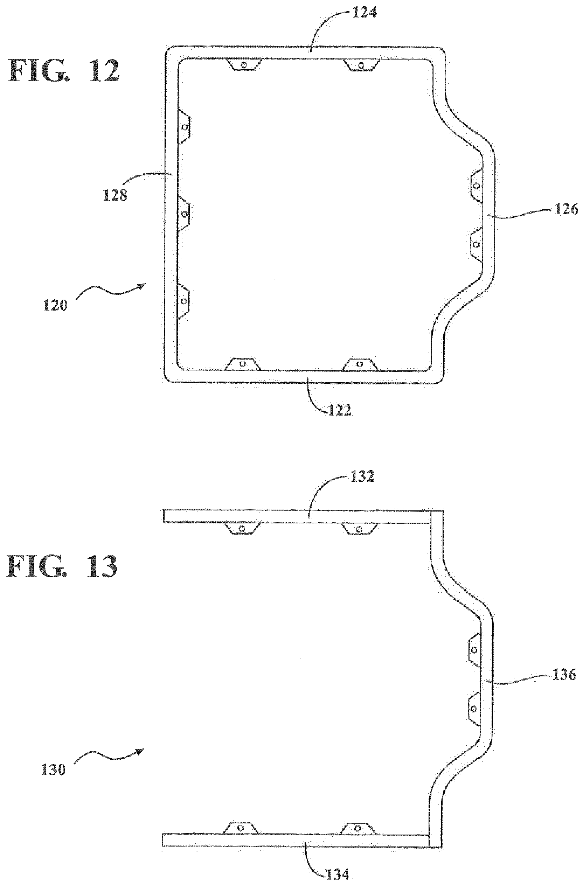

Figure 12 depicts a one-piece cassette shown generally at 120 that is a drop-in cassette style. The cassette 120 is a sunroof frame attachment assembly providing at least one attachment portion for an articulating portion (articulating portion is omitted for clarity, but, according to a broad aspect of the present invention, is understood to be any articulating assembly depicted in Figs. 1-9 that moves between at least a closed position and at least one open position for an open front cockpit feel). The cassette 120 operably attaches using at least one, preferably a plurality, of attachment points on both sides 122 and 124, e.g., providing door rails that seal with the vehicle and top, and the rear 126, e.g., providing a rear header in sealing engagement with the hard top 28. The front header 128 affixes to one or more of the footman loops provided on the vehicle 13 near the windshield frame. The frame 120 further operably connects to the vehicle 13, e.g., to the sport bars, vehicle opening frame, and/or cross car member, etc. and any combinations thereof).

Figure 13 depicts a 3-piece cassette shown generally at 130. The cassette 130 operably attaches using at least one, preferably a plurality, of attachment points on the sides 132,134 and rear 136 headers, e.g., providing door rails that seal with the vehicle and top and a rear header in sealing engagement with the hard top 28 seal. Providing a front header, separate or incorporated with the sides, is contemplated without departure from the scope of the present invention. The 3-piece cassette 130 is a sunroof frame attachment assembly providing at least one attachment portion for an articulating portion (articulating portion is omitted for clarity, but, according to a broad aspect of the present invention, is understood to be any articulating assembly depicted in Figs. 1-9 that moves between at least a closed position and at least one open position for an open front cockpit feel).

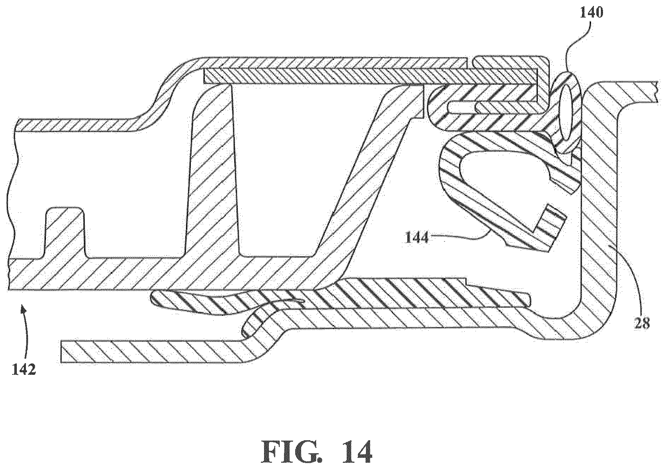

Figure 14 depicts an exemplary rear header seal 140 provided on a rear header shown generally at 142 sealing against an existing seal 144 of a hard top portion 146 that can be incorporated on any of Figures 1-13, according to an embodiment of the present invention.

Referring to the figures generally, providing at least one seal, e.g., rubber, foam, etc., to prevent water from entering the vehicle is contemplated without departing from the scope of the present invention. Preferably, rubber to prevent water permeation. According to one embodiment, the seal, e.g., bulb seal, is located on a door rail and seals off. Providing at least one hole in a trough / lip area of a door rail, e.g., between door edge and door weather-strip, for assisting with water drainage is contemplated without departing from the scope of the present invention. The present invention additionally or alternatively includes one or more of any of the following: That in any of the aforementioned embodiments, the soft top assembly is operably adaptable depending on the application to be in sealing engagement with a hard top roof portion. In any of the aforementioned embodiments, the soft top assembly further includes at least one rear header portion adaptable to be in sealing engagement with a hard top roof portion. In any of the aforementioned embodiments, the soft top assembly further includes at least one rear header portion adaptable to be in sealing engagement with at least one existing seal of a hard top roof portion. In any of the aforementioned embodiments, the soft top assembly further includes at least one rear header portion with at least one seal adaptable to be in sealing engagement with a hard top roof portion surface(s) and/or at least one existing seal of a hard top roof portion. In any of the aforementioned embodiments, the soft top assembly is adaptable to have a plurality of rigid and/or semi rigid cover sections (e.g., that fold, stack, flip, and/or slide, or otherwise create the open air sunroof feel, and/or combinations thereof) where at least one is adaptable to be in sealing engagement with a hard top roof portion. In any of the aforementioned embodiments, the soft top assembly further includes at least one door rail on each side adaptable to be in sealing engagement with a front door. In any of the aforementioned embodiments, the soft top assembly further includes at least one door rail on each side adaptable to provide at least one pivot point for a sunroof portion. In any of the aforementioned embodiments, the soft top assembly further includes at least one attachment surface on each side of the vehicle adaptable to be operably connected to the vehicle, e.g., to a sport roll bar. In any of the aforementioned embodiments, the soft top assembly further includes at least one seal to provide a weather tight seal and/or back-up weather tight seal anywhere on the assembly, e.g., such as where contacting the vehicle. In any of the aforementioned embodiments, the soft top assembly further includes at least one whether dampening cover that stays in place when the soft top assembly is moved to the open position. Providing a header that is steel, cast aluminum, molded plastic, or any other material to meet predetermined requirements is contemplated without departing from the scope of the present invention, preferably, the header is cast aluminum. The cover is operably coupled to the header, in a preferred embodiment. Visual attachment of fasteners for access is contemplated without departing from the scope of the present invention. Preferably, the soft panel top assembly is secured to a windshield frame with quick release latches. Locating features on each latch and a corresponding saddle on the windshield frame are contemplated without departing from the scope of the present invention. Pivotal clamping surface mechanism(s) or any other suitable attachment mechanism(s) for aligning and fixing to the vehicle is contemplated without departure from the scope of the present invention. At least one locking mechanism, e.g., rear location to lock down position of top in down position, and/or at least one trigger release arrangement is contemplated without departing from the scope of the present invention. Incorporating removable soft upper half door(s), soft full door(s) and/or soft quarter panels with any of the above soft panel top cover assemblies is contemplated without departing from the scope of the present invention. It is also contemplated that the soft panel top cover assemblies are adapted to selectively individually cover the driver's and passenger's sides of the front cockpit.

The 2-door and 4-door descriptions and drawings described herein are not limiting. It is understood that any embodiment, and combinations thereof, described herein can be modified and is/are utilizable on any convertible, 2-door or 4-door vehicle.

It is understood that the left side of the assemblies are generally a mirror-image of the right side.

The description of the invention is merely exemplary in nature and, thus, variations that do not depart from the gist of the invention are intended to be within the scope of the invention. Such variations are not to be regarded as a departure from the spirit and scope of the invention.

## Claims

1. An articulating front top cover assembly for a vehicle comprising:
an articulating portion operably connected to a frame portion and in sealing engagement with a hard top portion;
a cover operably connected to the articulating portion, where moving the articulating portion allows the cover to move between at least a closed position and an open position.

2. The articulating front top cover assembly of claim 1, wherein the frame portion comprises at least one door rail operably attached to the vehicle for operably mounting the articulating portion.

3. The articulating front top cover assembly of claim 1, wherein the frame portion comprises a pair of door rails with at least one pivot point on each door rail to pivotally attach the articulating portion.

4. The articulating front top cover assembly of claim 1, wherein the frame portion comprises a pair of door rails with a plurality of pivot points on each door rail to pivotally attach the articulating portion.

5. The articulating front top cover assembly of claim 1, wherein the frame portion comprises a pair of door rails with a rail or track system to slideably attach the articulating portion.

6. The articulating front top cover assembly of claim 1, wherein the frame portion is a cassette attachment.

7. The articulating front top cover assembly of claim 6, wherein the cassette is one piece.

8. The articulating front top cover assembly of claim 6, wherein the cassette is a plurality of pieces comprising at least a pair of door rails and a rear header.

9. The articulating front top cover assembly of claim 8, wherein the cassette further comprises a front header.

10. The articulating front top cover assembly of claim 1, wherein the articulating portion includes at least one hinge on each side of the assembly for folding the cover.

11. The articulating front top cover assembly of claim 1, wherein the articulating portion includes at least one hinge on each side of the assembly for folding the cover and at least one hinge toward the rear of the assembly for rotating the articulating portion rearward.

12. The articulating front top cover assembly of claim 1, wherein the frame includes a door rail and/or track on both sides of the assembly to slide the articulating portion rearward.

13. The articulating front top cover assembly of claim 1, further comprising at least one fabric management bow for managing the cover material to the open position.

14. The articulating front top cover assembly of claim 1, wherein the cover is at least one solid panel that slides rearward in a rail or track system.

15. The articulating front top cover assembly of claim 1, wherein the cover is at least one hinged panel that flips rearward.

16. The articulating front top cover assembly of claim 15, wherein the hinged panel has a rigid framework with a soft panel insert and/or skin.

17. The articulating front top cover assembly of claim 1, wherein the cover is operably connected to a front header and a linkage assembly pivotally connected to both sides of the frame by at least one pivot point, where the front header stays in a horizontal orientation when the cover moves between the closed and open positions.

18. A front cover assembly for a motor vehicle, comprising:
an articulating portion operably slidably and/or pivotally coupled to said motor vehicle and in sealing engagement with a hard top roof portion;
a cover operably connected to the articulating portion, wherein sliding and/or pivoting the articulating portion allows the cover to move between a closed position covering a front cockpit of said motor vehicle and at least one open position.

19. The front cover assembly of claim 18, wherein said articulating portion further includes at least one linkage assembly operably coupled to said motor vehicle at at least one hinge point operable to slide and/or pivot said articulating portion generally rearward to said at least one open position.

20. A front cover assembly for a sport utility vehicle, comprising:
at least one frame attachment assembly operably coupled to said vehicle and forming at least one sealing engagement surface;
an articulating portion operably slidably and/or pivotally coupled to said at least one frame attachment assembly and in sealing engagement with a hard top roof portion and/or at least one frame attachment assembly;
a cover operably connected to the articulating portion, wherein sliding and/or pivoting the articulating portion allows the cover to move between a closed position covering a front cockpit of said motor vehicle and at least one open position.
